# EUROPEAN PATENT SPECIFICATION

(11) **EP 3 560 988 B1**
(45) Date of publication and mention of the grant of the patent: **07.09.2022**
(21) Application number: 19171400.5
(22) Date of filing: 26.04.2019
(51) Int. Cl.: C08J 5/18, B65D 65/46

(54) **EDIBLE FOOD CONDITIONING FILM AND ITS MANUFACTURING PROCESS**
ESSBARER LEBENSMITTELKONDITIONIERUNGSFILM UND VERFAHREN ZU SEINER HERSTELLUNG
FILM COMESTIBLE POUR CONDITIONNEMENT ALIMENTAIRE ET SON PROCESSUS DE FABRICATION

(30) Priority: 27.04.2018 PT 2018110712
(43) Date of publication of application: 30.10.2019
(73) Proprietor: Instituto Politécnico De Leiria, 2411-901 Leiria (PT)
(72) Inventor: DE SOUSA AUGUSTO, ANA LUÍSA, 2445-115 PATAIAS (PT); JESUS SILVA, SUSANA FILIPA, 1170-241 LISBOA (PT); EUSTÁQUIO MARQUES, SÓNIA PATRÍCIA, 2540-329 CARVALHAL (PT); FARIA DA COSTA FÉLIX, RAFAEL ALEXANDRE, 2540-098 BOMBARRAL (PT); FERREIRA CARMONA, ANA MARTA, 2560-668 TORRES VEDRAS (PT); CALÇADA NOVAIS, SARA, 2520-193 FERREL (PT); LOUREIRO LEMOS, MARCO FILIPE, 2520-193 FERREL (PT)
(74) Representative: Pereira da Cruz, Joao

(56) References cited:
- CN-A- 104 558 648
- CN-A- 107 573 544
- PT-A- 107 369
- ANA AUGUSTO ET AL: "Influence of Codium tomentosum Extract in the Properties of Alginate and Chitosan Edible Films", FOODS, vol. 7, no. 4, 1 April 2018 (2018-04-01), page 53, XP055611054, DOI: 10.3390/foods7040053
- MYOUNGLAE CHO ET AL: "The Antioxidant Properties of Ethanol Extracts and Their Solvent-Partitioned Fractions from Various Green Seaweeds", JOURNAL OF MEDICINAL FOOD, vol. 13, no. 5, 1 October 2010 (2010-10-01), pages 1232-1239, XP055611076, US ISSN: 1096-620X, DOI: 10.1089/jmf.2010.1124

## Description

### FIELD OF THE INVENTION

The present invention is in the area of food packaging, more specifically biodegradable and edible food packaging.

### FRAMEWORK AND BACKGROUND OF THE INVENTION

The use of packaging is one of the factors with greater environmental impact in the processing of food products. The production of synthetic materials and routing of these after consumption of food products is a source of concern.

The most commonly used materials for the individualization of deep-frozen fish portions are films and synthetic plastic packaging with a physical barrier effect to the transfer of water and oxygen.

The object of the present invention is an edible food conditioning film and respective active manufacturing process composed of bioactive ingredients such as ethanolic and hydroethanolic fractions of seaweed, polysaccharide and glycerol for application in food matrices with a high fat content susceptible to lipid oxidation, namely fatty fish which will be subjected to freezing and refrigeration for its preservation. The present invention seeks to provide an active, edible and biodegradable package which contributes not only to the reduction of water loss, water retention capacity and reduction of evaporative losses in frozen fish but also to the minimization of lipid oxidation in fatty fish and to the convenience in the preparation of the product, since to the present invention are added algae fractions which also allow the replacement of the salt and other food condiments. With this packaging it is thus possible to combine the physical and biochemical protection of the food product with the ease of consumption since the packaging can be consumed in conjunction with the food.

Thus, the present invention, having regard to its distinguishing technical characteristics, has the following advantages with respect to the state of the art:
- replacement of the current non-biodegradable synthetic packaging used for the individual conservation of fish fillets, contributing to the reduction of the ecological footprint;
- product that allows a physical and biochemical protection of the food matrix where it is applied;
- biodegradable product contributing to the sustainability of the production process, reducing waste in the product life cycle;
- product that simultaneously allows the inhibition of lipid peroxidation of the food, water retention capacity and decrease of evaporative losses over the freezing time;
- edible product, it being possible to make and consume it simultaneously with the food matrix where it is applied;
- allows the addition of seasonings by adding new ingredients to the film formulation without harming the protective action of the film, allowing the dual function of preservation and increase the convenience and organoleptic appeal of the food product.

The present invention finds a closer background in the following disclosed documents:
(D1) Master Thesis 2013 (Augusto, A. Development of edible coatings for IV gamma products) which discloses the edible film formulation, which differs from the present invention by the use of algae extracts and not ethanolic and hydroethanolic fractions.
(D2) Publication (Augusto et al., Influence of *Codium tomentosum* extract in the properties of alginate and chitosan edible films 2018), which discloses the edible film formulation, which differs from the present invention because seaweed extracts and with a drying time to obtain the films also of 24 hours.
(D3) Publication (Vala et al., Effect of gel skin-based coating enriched with seaweed extracts on the quality of filaments during storage at 4°C 2017) discloses the edible film formulation by which it differs from the present invention by that the algae used are freeze-dried and not dried at room temperature.

The difference between the present invention and the documents disclosed in the state of the art lies essentially in the fact that fractions and not extracts are used in the present invention. In extracts there is the extraction of all compounds without differentiation between types of compounds, whereas in the fractions a division of the most efficient compounds is obtained, not being obtained in the end a mixture of compounds as in the extracts, once it is given a fractionation of the molecular compounds that were extracted.

### SUMMARY OF THE INVENTION

Object of the present invention is an edible food conditioning film and a biodegradable manufacturing process comprising bioactive ingredients such as ethanolic and hydroethanolic fractions of seaweed, polysaccharide and glycerol for application in food matrices with a high fat content susceptible to lipid oxidation, namely fatty fish subject to freezing and refrigeration for their conservation over time. The edible food packaging obtained after the manufacturing process is in the form of food and biodegradable active film or film which will be used to wrap food all over its surface at the time of storage and which can then be processed and consumed simultaneously with the food matrix.

The present invention essentially serves the purpose of packaging and preserving food during freezing and/or refrigeration. It consists of an obvious physical barrier in that it is a packaging in the form of a film or food film, protecting the food from contact with the outside, and at the same time constitutes a biochemical barrier in that it contains in its formulation components which promote water retention in the and decrease of evaporative losses throughout the freezing time and to prevent lipid oxidation and consequent unwanted organoleptic changes and deterioration thereof.

### DETAILED DESCRIPTION OF THE INVENTION

It is now important to detail all the processes that gave rise to this innovation, from the production of ethanolic and hydroethanolic fractions to the production of active edible packages and the application of active and biodegradable food packaging in the preservation of frozen fish. The invention is defined in the appended claims.

The present invention is composed essentially of the following components (as a percentage of the formulation):
- 0.5 to 1.5% ethanolic and hydroethanolic fraction of seaweed;
- 1% alginate;
- 1% glycerol; and
- 96.5% to 97.5% polar solvent (water).

The use of the above-mentioned components allows the formation of an active and biodegradable food packaging for application in frozen fish. The ethanolic and hydroethanolic fractions are obtained by a fractionation method using solutions. These fractions extracted from algae have highly desirable antioxidant and antimicrobial properties which, when incorporated in the present invention, play a very important role in preserving frozen fish: increases shelf life, preventing and delaying the deterioration of food, especially fatty foods that are subject to a strong enzymatic activity due to the presence of a high lipid content. It is also important to mention that the incorporation of these fractions gives a salty taste to the food when cooked, and can be consumed simultaneously with the food. The ethanolic and hydroethanolic fractions of seaweed are obtained by the above method, which comprises the following steps:
1. A mixture of 15 g of dried seaweed at room temperature (25°C) and ground using an industrially sustainable method with 150 ml of solvent, the solvent being ethanol or the mixture of ethanol with water;
2. stirring the mixture for 20 minutes at room temperature;
3. filtration of the mixture;
4. evaporation of ethanol;
5. obtaining the ethanolic and hydroethanolic fraction;
6. drying of the ethanolic and hydroethanolic fraction.

In the last step of the process, the ethanolic and hydroethanolical fractions are subjected to a drying process until a powder is obtained in order to preserve the product for a prolonged time.

The above described process allows to obtain the ethanolic and hydroethanolic fraction that contain the compounds of interest, which contains the ethanolic and hydroethanolic fraction with greater bioactivity.

In a preferred form of the invention, the algae of the species *Asparagopsis armata, Sargassum muticum, Codium fragile, Colpomenia peregrina, Grateloupia turuturu, Undaria pinnatifida* and *Caulerpa racemosa,* algae harvested, and algae are subject to the process of obtaining ethanolic and hydroethanolic fractions and dried at room temperature (25°C) using an industrially sustainable method.

After obtaining the ethanolic and hydroethanolic fractions it is possible to proceed to the formulation that gives rise to active and biodegradable food packaging. Next, all the constituents of the active and biodegradable food packaging of the present invention are presented.

The ethanolic and hydroethanolic fractions are added to the polymer alginate, a constituent secondary constituent of the active food conditioning foodable film. This polysaccharide only contributes in the formation of the film that will involve the foods to be preserved, since it forms a film that allows to envelop the food. The alginate in the present invention functions only as carrier vehicle or physical carrier for the ethanolic and hydroethanolic fractions used. With the addition of the respective fractions it is possible to alter the biophysical characteristics of the alginate, preventing the disintegration of the same upon contact with the food matrix. With this step it is possible to obtain an active biodegradable packaging.

Finally, to the final formulation of the edible food conditioning film is also added glycerol which acts as a surfactant, allowing a more effective mixing of the alginate with the ethanolic and hydroethanolic fractions.

The process of manufacturing the edible food-conditioning film leads to obtaining an alimentary film or film comprising the following steps:
1. Dissolution of the ethanolic and hydroethanolic fraction of seaweed in water, until obtaining a final concentration of 0.5 g/100 mL to 1.5 g/100 mL.
2. addition of the alginate with a final concentration of 1% to the previous solution;
3. dissolution of the solution obtained from mixing the ethanolic fraction with the alginate by means of temperature;
4. cooling to the temperature of 45°C;
5. addition of glycerol to a final concentration of 1%;
6. filtration of the solution through a gauze;
   Transferring the filtered solution into the vessel for drying the solution and obtaining the film;
8. drying at 40°C for 12 hours;
9. removal of the film for future application in the food matrix forming an active packaging.
10. Application in the food matrix by wrapping and hot sealing.

The final film that is formed typically has a density of solids between 75 and 105 g/m², final water activity (aW) between 20 and 30% and thickness between 0.05 mm and 0.08 mm.

Thus far the composition and manufacturing process of the edible food conditioning film, i.e. the production of the ready-to-use food and biodegradable film, has been described.

It is now necessary to discriminate the steps of transforming the film and its application in foods as active edible packaging, the main function of the present invention, these being the following steps:
1. cutting the film with the necessary measures for the final packaging;
2. applying the film to the food matrix previously frozen or at the time of freezing thereof in order to cover the whole exposed area of the food matrix;
3. rapid freezing of the packaging/food matrix package;
4. Low temperature storage.

With the last step described above it is then possible to preserve frozen fish using an active and biodegradable food packaging.

## Claims

1. An edible food conditioning film **characterized by** forming a film composed of:
• 0.5% to 1.5% of ethanolic and hydroethanolic fraction of seaweed;
• 1% alginate; and
• 1% glycerol; and
• 96.5% to 97.5% water.

2. A film according to the preceding claim **characterized in that** the seaweed are dried at room temperature.

3. A film according to the preceding claim **characterized in that** the seaweed from the ethanolic and hydroethanolic fraction are algae of the species *Asparagopsis armata, Sargassum muticum, Codium fragile, Colpomenia peregrina, Grateloupia turuturu, Undaria pinnatifida* and/or *Caulerpa racemosa.*

4. Film according to the preceding claims, **characterized in that** the film has a solids concentration of 75 to 105 g/m².

5. Film according to the preceding claims, **characterized in that** the film thickness is between 0.05 and 0.08 mm.

6. A method for manufacturing edible food conditioning film described in claims 1 to 5, **characterized in that** it comprises the following steps:
a) dissolution of the ethanolic and hydroethanolic fraction of seaweed in water, until obtaining a final concentration of 0.5 g/100 mL to 1.5 g/100 mL;
b) addition of the alginate, with a final concentration of 1%, to the previous solution;
c) dissolving the solution obtained from mixing the ethanolic fraction with the alginate by means of temperature until complete dissolution;
d) cooling to the temperature of 45°C;
e) addition of glycerol to a final concentration of 1%;
f) filtering the solution through a gauze;
g) transferring the filtered solution into the vessel for drying the solution and obtaining a film;
h) drying the film at 40°C for 12 hours.

7. Use of edible food conditioning film described in claims 1 to 5 in frozen products susceptible to lipid peroxidation, in particular frozen fish.

## Patentansprüche

1. Eine essbare Lebensmittelkonditionierungsfolie, **dadurch gekennzeichnet, dass** es eine Folie bildet, die aus folgendem besteht:
• 0,5% bis 1,5% äthanolischen und hydroäthanolischen Anteil an Meeresalgen;
• 1% Alginat; und
• 1% Glyzerol; und
• 96,5% bis 97,5% Wasser.

2. Eine Folie nach vorherigem Anspruch, **dadurch gekennzeichnet, dass** die Meeresalgen bei Raumtemperatur getrocknet werden.

3. Eine Folie nach vorherigen Ansprüchen, **dadurch gekennzeichnet, dass** die Meeresalgen aus dem äthanolischen und hydroäthanolischen Anteil Algen der Arten *Asparagopsis armata, Sargassum muticum, Codium fragile, Colpomenia peregrina, Grateloupia turuturu, Undaria pinnatifida* und/oder *Caulerpa racemosa* sind.

4. Folie nach vorherigen Ansprüchen, **dadurch gekennzeichnet, dass** die Folie eine Feststoffkonzentration von 75 bis zu 105 g/m² hat.

5. Folie nach vorherigen Ansprüchen, **dadurch gekennzeichnet, dass** die Foliendicke zwischen 0,05 und 0,08 mm beträgt.

6. Ein Verfahren zur Herstellung von der in Ansprüche 1-5 beschriebenen essbaren Lebensmittelkonditionierungsfolie, **dadurch gekennzeichnet, dass** es die folgende Schritte umfasst:
a) Auflösung des äthanolischen und hydroäthanolischen Anteils an Meeresalgen in Wasser, bis eine Endkonzentration von 0,5 g/100 mL bis 1,5 g/100 mL erreicht wird;
b) Zugabe des Alginats, mit einer Endkonzentration von 1%, zu der vorigen Lösung;
c) Auflösen der durch die Vermischung des äthanolischen Anteils und Alginats erhaltenen Lösung, mittels Temperatur, bis zur vollständigen Auflösung;
d) Abkühlung bis auf die Temperatur von 45°C;
e) Zugabe von Glyzerol bis eine Endkonzentration von 1% erreicht wird;
f) Filtern der Lösung mittels einer Gaze;
g) Übertragen der gefilterten Lösung in den Behälter zum Trocknen der Lösung und Beschaffung einer Folie;
h) Trocknen der Folie für 12 Studen bei 40°C.

7. Verwendung der in Ansprüche 1-5 beschriebenen essbaren Lebensmittelkonditionierungsfolie an Tiefkühlprodukten, die anfällig für Lipidperoxidation sind, insbesondere Tiefkühlfisch.

## Revendications

1. Film de conditionnement alimentaire **caractérisé par** la formation d'un film composé de :
• 0,5% à 1,5% fraction éthanolique et hydroéthanolique d'algues ;
• 1% alginate ; et
• 1% glycérol ; et
• 96,5% à 97,5% eau.

2. Film selon la revendication précédente, **caractérisé en ce que** les algues sont séchées à la température ambiante.

3. Film selon la revendication précédente, **caractérisé en ce que** les algues de la fraction éthanolique et hydroéthanolique sont des algues des espèces *Asparagopsis armata, Sargassum muticum, Codium fragile, Colpomenia peregrina, Grateloupia turuturu, Undaria pinnatifida* et/ou *Caulerpa racemosa.*

4. Film selon les revendications précédentes, **caractérisé en ce que** le film a une concentration de solides de 75 à 105 g/m².

5. Film selon les revendications précédentes, **caractérisé en ce que** l'épaisseur du film est entre 0,05 et 0, 08 mm.

6. Une méthode pour fabriquer le film de conditionnement alimentaire décrit dans les revendications 1 à 5, **caractérisée en ce qu'**elle comprend les étapes suivantes :
a) dissolution en eau de la fraction éthanolique et hydroéthanolique d'algues, jusqu'à obtenir une concentration finale de 0,5 g/100 mL à 1,5 g/100 mL ;
b) addition de l'alginate, avec une concentration finale de 1%, à la solution préalable ;
c) dissolution de la solution obtenue du mélange de la fraction éthanolique avec l'alginate par moyen de température jusqu'à la dissolution complète ;
d) refroidissement jusqu'à la température de 45°C ;
e) addition de glycérol jusqu'à la concentration finale de 1% ;
f) filtration de la solution à travers une gaze ;
g) transfert de la solution filtrée à l'intérieur du récipient pour sécher la solution et obtenir le film ;
h) sécher le film à 40°C pendant 12 heures.

7. Usage du film de conditionnement alimentaire décrit dans les revendications 1 à 5 sur des produits congelés susceptibles de peroxydation lipidique, en particulier le poisson congelé.
